# EUROPEAN PATENT APPLICATION

(11) **EP 4 403 020 A1**
(43) Date of publication of application: **24.07.2024**
(21) Application number: 22867777.9
(22) Date of filing: 12.09.2022
(51) Int. Cl.: A01G 9/14, A01G 9/24, A01G 9/26

(54) **MODULAR GREENHOUSES FOR GROWING FRUITS AND VEGETABLES**

(30) Priority: 13.09.2021 MD 20210079 U
(71) Applicant: Munteanu, Grigore, Com. Comarna nr. 5E (RO)
(72) Inventor: Munteanu, Grigore, Com. Comarna nr. 5E (RO)
(74) Representative: Vasilescu, Raluca
(86) International application number: PCT/MD2022/000003
(87) International publication number: WO 2023/038510

(57) **Abstract**

The invention relates to modular greenhouses for growing fruits and vegetables comprising a frame formed from piles (1), posts (2), longitudinal beams (3), transverse beams (4), and a cambered roof (5) formed from arched beams or a flat roof (5) formed from springs; the greenhouses being equipped with a system for fully opening/closing the roof, comprising an electric motor (6) with a reduction drive (7), and a transmission (8), which are connected to a rotary shaft (12), being rigidly mounted in the center of the roof, and connected to a helical shaft, spanning the entire width of the frame, and to a movable reduction drive connected to the rotary shaft.

## Description

The invention relates to the field of agricultural machinery and installations, in particular to modular fully ventilated greenhouses for growing fruits and vegetables in order to grow plants as naturally as possible.

A design of a building structure is known which consists of a frame of profiled posts and beams, sheathed from the outside with a sheet material, for example polyethylene film. Wherein at least from the roof side, the film is secured by its longitudinal edge to a longitudinal beam joined with the frame, in which a second longitudinal beam is secured to an opposite parallel longitudinal edge of the sheet and is driven with the ability to rotate about its axis, such that the second beam wraps the film onto itself, and wherein the actuating mechanism consists of a reversible motor with a resistance-sensitive sensor that adjusts the power of the motor to stop it, a self-locking transmission, a mechanical torque limiter, a resistance sensor or a temperature sensor, a sensor built into the power supply circuit of an electric motor [1].

The described building structure is actually a greenhouse construction.

The main disadvantages of the known greenhouse are that the pillars of the greenhouse frame require the erection of some foundation constructions, which makes constructing a greenhouse more expensive, complex and time-consuming, as well as the impossibility of ventilation only in the upper part of the greenhouse where moisture accumulates, and the roof opening opens to the width of the greenhouse modules.

The technical problem solved by the invention is to provide greenhouses, the design of which ensures low cost and speed of their erection, as well as to provide a roof that opens from top to bottom, so that the moisture accumulated in the upper part of the greenhouse is removed, and the warm air below is preserved.

The greenhouse, according to the invention, solves the above technical problem by comprising a modular frame made of metal profile material, formed by piles, posts, longitudinal and transverse beams, and a curved roof from arched beams, covered from the outside with a sheet material, for example polyethylene film; a system for the complete opening/closing of the roof comprising an electric motor with a reduction gearbox and a transmission joined with a rotating shaft placed on guides through support elements kinematically coupled to the toothed bars, wherein the guides are secured to longitudinal beams, as well as
units are secured to the ends of the rotating shaft for transmitting rotation to a cylindrical rod, in which one edge of the polyethylene film is secured, and the other edge is attached to the longitudinal beam of the lower edge of the roof with the ability to wind the polyethylene film onto the rod from the ridge towards the bottom of the roof and to unwind it in the reverse direction.

The greenhouse according to the invention solves the above technical problem by comprising a modular frame made of metal profile material, formed by piles, posts, longitudinal and transverse beams, and a flat roof covered from the outside with a sheet material, such as polyethylene film; a system for the complete opening/closing of the roof, comprising an electric motor with a reduction gearbox and a transmission, rigidly mounted in the centre of the roof and coupled to a screw shaft arranged along the width of the housing, and to a movable reduction gearbox coupled to a rotating shaft, placed on guides by means of support elements kinematically coupled to the toothed bars, wherein the guides are secured on the longitudinal beams, wherein at the ends of the rotating shaft, units are secured to transmit rotation to a cylindrical rod, in which one edge of the polyethylene film is secured, and the other edge is attached to the longitudinal beam of the lower edge of the roof, with the ability to wind the polyethylene film onto the rod from the ridge towards the bottom of the roof and to unwind it in the reverse direction.

The greenhouses can be further equipped with a removable rod with an insect protection mesh and a removable rod with a shading mesh, each being connected to a rotating shaft and actuated by subunits through removable gears and arranged in parallel to the cylindrical rod between toothed bars and guides, wherein the ends of said meshes are rigidly secured on the roof ridge with the ability to wind/unwind the meshes towards the bottom of the roof.

The greenhouses can be further equipped with a system for opening the side walls of the greenhouse, consisting of a zinc-plated vertical pipe arranged in the middle of each side wall, on which two motors with reduction gearboxes are mounted through plastic wheels, one for the polyethylene film and the other for the insect protection mesh, with the ability to wind/unwind them onto an aluminium profile pipe through a chain coupling connected to the motors.

Greenhouses can be further equipped with a lighting-increasing system consisting of an aluminium profile pipe secured at one end of the housing and actuated by a motor, wherein white light-reflecting film is wound onto the aluminium profile pipe and fixed using fastening elements and guide washers, wherein a cable is attached to its end, the second end of which is attached to a zinc-plated pipe arranged at the opposite end of the greenhouse housing and actuated by another motor.

The greenhouses can be further equipped with a water and snow drainage system consisting of troughs arranged between the frame modules.

In this case, a double-layered polyethylene film can be used, so that its internal space can be filled with air.

The advantages of the invention are as follows. }

The solutions according to the invention allow to open more than 95% of the roof surface and the wall surfaces compared to other greenhouses, creating an advantage for better ventilation inside, which affects the quality of the fruits and vegetables grown. These types of greenhouses allow for more ecological cultivation of crops due to the greenhouse being completely opened, as well as the advantages of the natural climate during snowfall in the cold season and rain or sun in the warm season. The system allows to completely open the roof from top to bottom, thereby allowing humid air to be removed from the greenhouse while keeping warm air at the lower level, avoiding stress to the plants. Connecting an automated system with an insect protection mesh protects the plants from pests. Equipping greenhouses with shading meshes protects the plants from direct sunlight and very high temperatures. Mounting the greenhouse on metal piles by means of an automated equipment provides a much faster erection, involving minimal labour intensity and lower costs. The greenhouse pillars are used as a support system for the growth of plants, especially fruit trees and shrubs. The automated lighting enhancement system in the greenhouse creates a brighter environment and promotes plant development. A double-layered polyethylene film can be used, so that an air cushion is formed to better preserve the temperature inside.

The invention is illustrated by drawings in Fig. 1-7, where:
Fig. 1 is a schematic sectional view of different designs of a greenhouse housing made of modules;
Fig.2 shows a basic assembly of the greenhouse housing;
Fig.3 shows a greenhouse with a system for the complete opening/closing of a curved roof;
Fig. 4 shows a greenhouse with a system for the complete opening/closing of a flat roof;
Fig.5 shows removable rods with an insect protection mesh and a shading mesh;
Fig.6 shows a greenhouse with a system for opening the side walls of the greenhouse;
Fig. 7 shows a greenhouse with a lighting enhancement system,

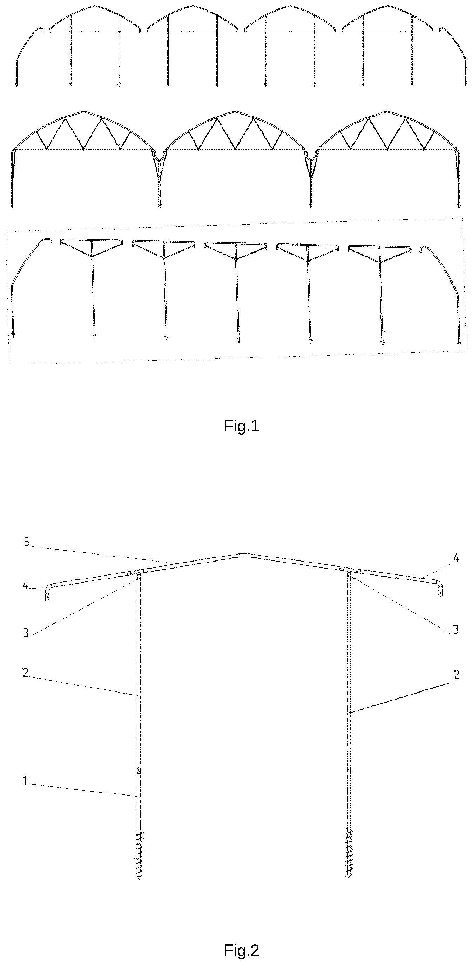

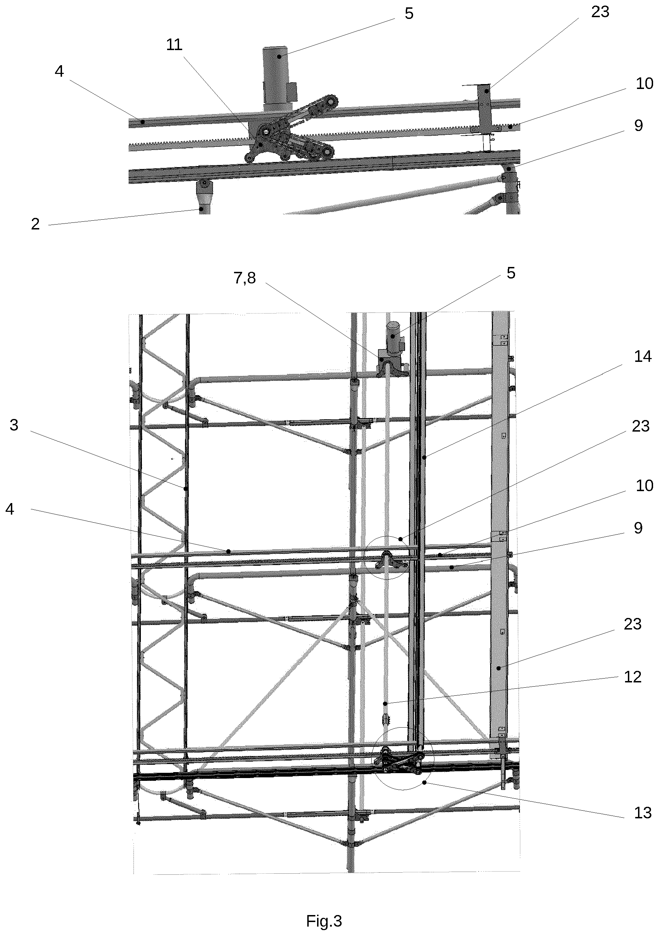

A modular greenhouse for growing vegetables and fruits (Fig. 1-7) comprises a housing made of modules made of metal profile material, arranged in rows, consisting of piles 1, pillars 2, longitudinal beams 3 and transverse beams 4, and a curved roof made of arched beams 5, covered from the outside with a sheet material, for example polyethylene film. The greenhouse is equipped with a system for the complete opening/closing of the roof (Fig. 3), which comprises an electric motor 6 with a reduction gearbox 7 and a transmission 8 joined with a rotating shaft 12 arranged on guides 9 on support elements, kinematically coupled to a toothed bar 10 through the guides 9 secured on the longitudinal beams 3, wherein subunits 13 are secured at the ends of the rotating shaft 12 to transmit rotation to a cylindrical rod 14, in which one edge of the polyethylene film is secured, and the other edge is attached to the longitudinal beam 3 at the edge of the roof, with the ability to wind the polyethylene film onto the rod from the roof ridge towards the bottom of the roof and to unwind it in the reverse direction.

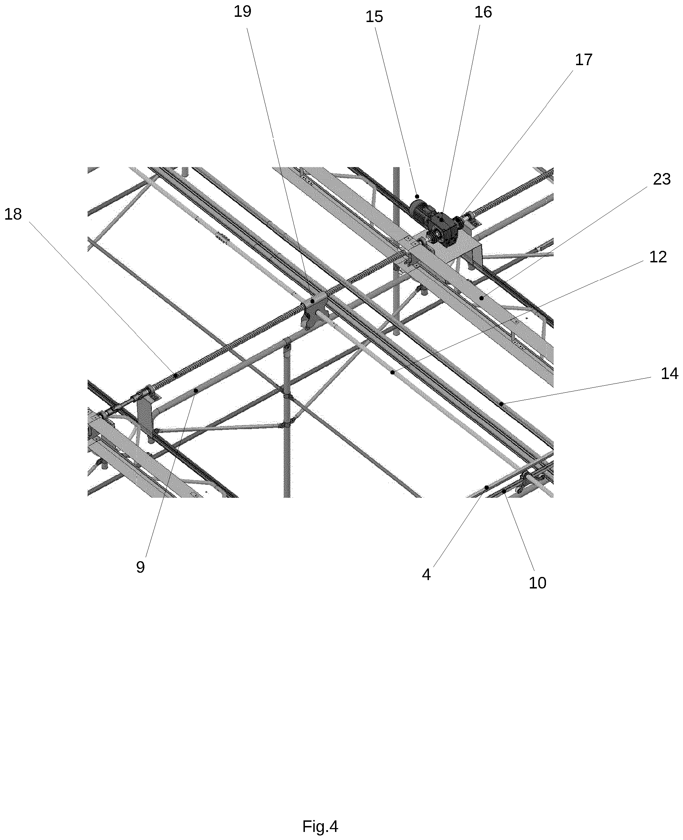

A modular greenhouse for growing vegetables and fruits comprises a housing made of modules made of metal profile material, arranged in rows, consisting of piles 1, pillars 2, longitudinal beams 3 and transverse beams 4, and a flat roof made of beams 5, covered from the outside with a sheet material, for example polyethylene film. The greenhouse is equipped with a system for the complete opening/closing of the roof (Fig. 4), which comprises an electric motor 15 with a reduction gearbox 16 and a transmission 17, rigidly mounted in the centre of the roof and connected to a screw shaft 18 arranged along the width of the housing and to a movable reduction gearbox 19 connected to a rotating shaft 12, placed on guides 9 and supports 11, kinematically coupled to a toothed bar 10, wherein the guides 9 are secured on the longitudinal beams 3 (not shown in the Figure), and at the ends of the rotating shaft 12, units 13 (not shown in the Figure) are secured to transmit rotation to a cylindrical rod 14, in which one edge of the polyethylene film is secured, and the other edge is attached to the longitudinal beam 3 at the edge of the roof, with the ability to wind the polyethylene film onto the rod from the roof ridge towards the bottom of the roof and to unwind it in the reverse direction.

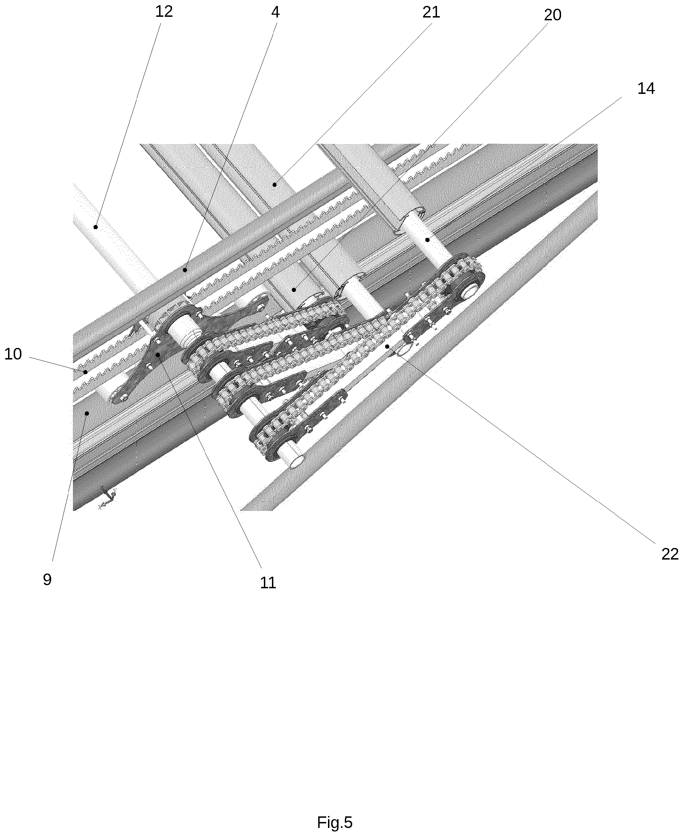

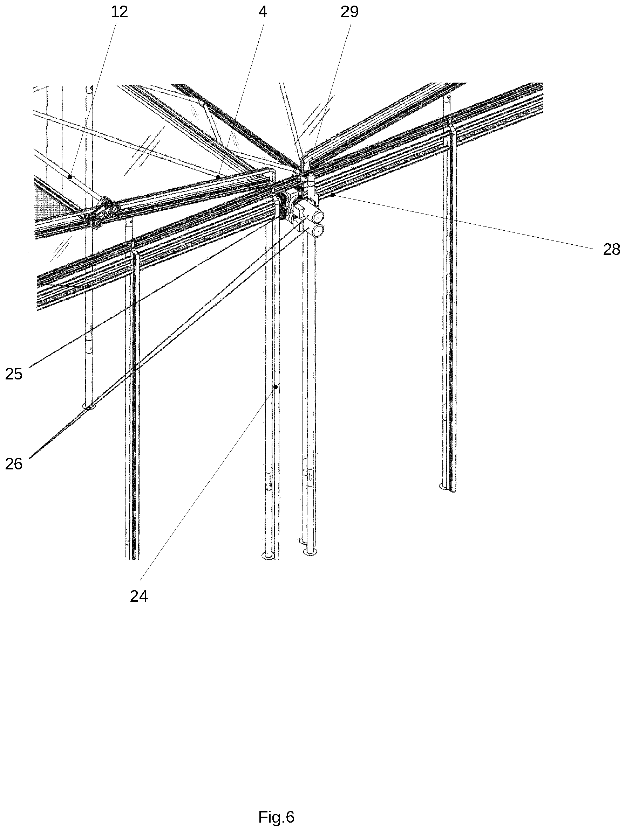

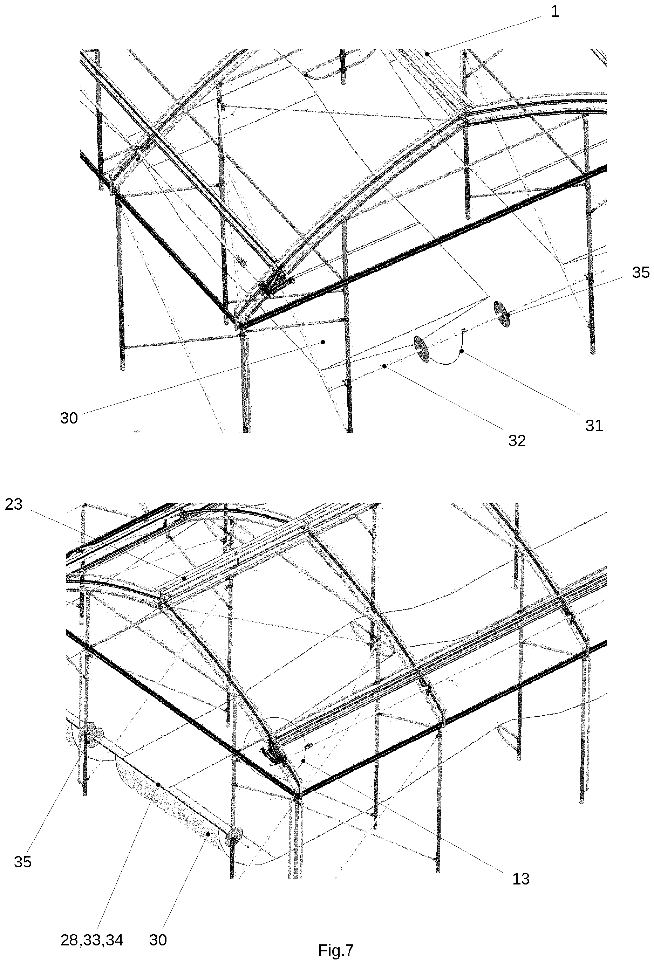

The greenhouses can be further equipped with a removable rod 20 with an insect protection mesh and a removable rod 21 with a shading mesh (Fig. 5), each rod being connected to a rotating shaft 12 actuated by units 13 (not shown in the Figure) through removable gears 22 arranged in parallel to a cylindrical rod 14 between toothed bars 10 and guides 9, wherein the ends of said meshes are rigidly secured on the roof ridge 23 (not shown in the Figure), with the ability to unwind the meshes from the rods 20 and 21 towards the bottom of the roof and to wind onto them in the reverse direction. The greenhouses can be further equipped with a system for opening the side walls of the greenhouse (Fig. 6), consisting of a zinc-plated vertical pipe 24 arranged in the middle of each side wall, on which two motors 26 with reduction gearboxes are mounted through plastic wheels 25, one for the polyethylene film 27 and the other for the insect protection mesh, with the ability to wind/unwind them onto an aluminium profile pipe 28 through a chain coupling 29 connected to the motors 26. The greenhouses can be further equipped with a lighting enhancement system (Fig. 7) consisting of an aluminium profile pipe secured at one end of the housing and actuated by a motor (not shown in the Figure), with white light-reflecting film 30 wound thereon and fixed by means of fastening elements 33 and 34 and guide washers 33, wherein a cable 31 is attached to its end, whereas its second end is secured to a zinc-plated pipe 32 arranged at the opposite end of the greenhouse housing and actuated by another motor 26.

The greenhouses can be further equipped with a water and snow drainage system consisting of troughs arranged between the frame modules. In this case, a double-layered polyethylene film can be used, so that its internal space can be filled with air. The greenhouses are assembled as follows.

The greenhouse frames are assembled from modules from standard metal profile material, securing is carried out by known methods and elements not described herein with the ability of sheathing dismantling. This allows to assemble several modules together to increase the coverage area or, vice versa, to reduce it.

The system for the complete opening/closing of the curved roof operates as follows.

At start-up, the electric motor 6 through the reduction gearbox 7, the transmission 8 and the rotating shaft 32 placed on the guides 9 through the support elements transmits rotational motion through the subunits 13 to the cylindrical rod 14, from which the film is unwound (or wound) onto the arched beams 5 of the roof. In this case, the motor 6, the reduction gearbox 7, the transmission 8, the support elements 11, the rotating shaft 12, the subunits 13 and the cylindrical rod 14, as a single whole, perform straight-line motion along the guides 9 due to the kinematic linkage of the support elements 11 with the toothed bar 10. Unlike the curved roof, the whole system for the opening/closing operates differently in the case of the flat roof. The difference consists in that the electric motor 15 is mounted rigidly in the centre of the roof and, through the reduction gearbox 16 and the transmission 17, imparts rotation to the screw shaft 18 arranged along the entire width of the roof in both directions. The shaft 18 drives the movable reduction gearbox 19 into straight-line motion, which, in turn, transmits rotation to the rotating shaft 12. Resting on the guides 9 by several supporting elements 11, the shaft 12 transmits rotational motion through the subunits 13 to the rod 14, from which the polyethylene film is unwound (or wound) onto the arched beams 5 of the roof. In this case, the reduction gearbox 19, the support elements 11, the rotating shaft 12, the subunits 13 and the rod 14, as a single whole, perform straight-line motion along the guides 9 due to the kinematic linkage of the support elements 11 with the toothed bar 10.

When the greenhouses are equipped with removable rods 20 with an insect protection mesh 21 and a shading mesh, both meshes are wound onto each rod separately and act independently of each other from the subunits 13 through removable gears 22. The ends of said meshes are rigidly secured on the roof ridge 23 with the ability to wind/unwind the mesh from the rods towards the bottom of the roof. When there is no need to use these meshes, the rods 20 and 21 are disconnected from the assembly subunits 13 together or separately and placed in the protected area of the ridge 23. The system for the opening/closing of the side walls of the greenhouse operates as follows.

In the middle of each side wall of the greenhouse, there is a zinc-plated vertical pipe 24, on which two motors 26 with reduction gearboxes are mounted through plastic wheels 25, one for the film and the other for the insect protection mesh, with the ability to wind/unwind them onto the aluminium profile pipe 28 through the chain coupling 29 connected to the motors 26.

The lighting enhancement system consists of an aluminium profile pipe, which is secured at one end of the frame and actuated by the motor, the white light-reflecting film 30 is wound on the aluminium profile pipe and secured by means of the fastening elements 33 and 34 and the guide washers 35, wherein the cable 31 is attached to the end of the film, and its second end is attached to the zinc-plated pipe 32 arranged at the opposite end of the greenhouse frame and actuated by another motor. If necessary, the pipe 32 rotates, winds the cable 31 onto itself and by unwinding the film 30 pulls it over the entire space between the rows. The reverse action occurs when the pipe 28 is rotated, which winds the film 30 onto it.

The water and snow drainage of the roof is formed by troughs, for example removable troughs made of polyethylene film, placed between the greenhouse modules and secured with supporting elements. When the trough is filled with water or snow, it detaches from the lock under its own weight on one side, while remaining hanging on the hinges.

## Claims

1. A modular greenhouse for growing vegetables and fruits, comprising a frame made of modules made of metal profile material, consisting of piles (1), pillars (2), longitudinal beams (3) and transverse beams (4) and a curved roof made of arched beams (5), covered from the outside with a sheet material, for example polyethylene film; a system for the complete opening/closing of the roof comprising an electric motor (6) with a reduction gearbox (7) and a transmission (8) connected to a rotating shaft (12) placed on guides (9) and supports (11) kinematically coupled to a toothed bar (10); the guides (9) are secured on the longitudinal beams (3), wherein at the ends of the rotating shaft (12), subunits (13) are secured to transmit rotation to a cylindrical rod (14), in which one edge of the polyethylene film is secured, and the other edge is attached to the longitudinal beam (3) at the edge of the roof, with the ability to wind the polyethylene film onto the rod (14) from the roof ridge towards the bottom of the roof and to unwind it in the reverse direction.

2. A modular greenhouse for growing vegetables and fruits, comprising a housing made of modules made of metal profile material, consisting of piles (1), pillars (2), longitudinal beams (3) and transverse beams (4) and a flat roof made of arched beams (5), covered from the outside with a sheet material, for example polyethylene film, a system for the complete opening/closing of the roof comprising an electric motor (15) with a reduction gearbox (16) and a transmission (17) rigidly mounted in the centre of the roof and connected to a screw shaft (18) arranged along the entire width of the housing and to a movable reduction gearbox (19) connected to a rotating shaft (12) placed on guides (9) and supports (11) kinematically coupled to a toothed bar (10); the guides (9) are secured on the longitudinal beams (3), wherein at the ends of the rotating shaft (12), subunits (13) are secured to transmit rotation to a cylindrical rod (14), in which one edge of the polyethylene film is secured, and the other edge is attached to the longitudinal beam (3) at the edge of the roof, with the ability to wind the polyethylene film onto the rod (14) from the roof ridge towards the bottom of the roof and to unwind it in the reverse direction.

3. The greenhouse of claims 1 and 2, wherein it is further equipped with a removable rod (20) with an insect protection mesh and a removable rod (21) with a shading mesh, each of the rod (20) and the rod (21) is connected to the rotating shaft (12) and driven by the subunits (13) through removable gears (22) and is arranged in parallel to the cylindrical rod (14) between the toothed bars (10) and the guides (9), wherein the ends of said meshes are rigidly secured on the roof ridge (23) with the ability to unwind the meshes from the rod (20) or the rod (21) towards the bottom of the roof and to wind onto them in the reverse direction.

4. The greenhouse of claims 1 and 2, wherein it is further equipped with a system for the opening/closing of the side walls of the greenhouse, consisting of a zinc-plated vertical pipe (24) arranged in the middle of each side wall, on which two motors (26) with reduction gearboxes are mounted by means of plastic wheels (25), one being for the film and the other one being for the insect protection mesh, with the ability to wind/unwind them onto an aluminium profile pipe (28) connected to the motors (26) through a chain coupling (29).

5. The greenhouse of claims 1 and 2, wherein it is further equipped with a lighting enhancement system consisting of the aluminium profile pipe (28) secured at one end of the frame and actuated by the motor (26), having a white light-reflecting film (30) wound and secured by means of fastening elements (33), (34) and guide washers (35), wherein a cable (31) is attached to the end of the film, and its second end is attached to a zinc-plated pipe (32) arranged at the opposite end of the frame and driven by another motor (26).

6. The greenhouse of claims 1 and 2, wherein it is further equipped with a water and snow drainage system formed by troughs arranged between the frame modules.

7. The greenhouse of claims 1 to 6, wherein the polyethylene film is double-layered, so that its internal space can be filled with air.
